Europäisches Patentamt

**European Patent Office**

Office européen des brevets

(19)

(11) Publication number: **0 006 965**

**A1**

(12)

# EUROPEAN PATENT APPLICATION

(21) Application number: **79100766.9**

(51) Int. Cl.³: **C 08 G 63/64**

(22) Date of filing: **14.03.79**

(30) Priority: **31.03.78 US 892224**

(43) Date of publication of application:
**23.01.80 Bulletin 80/2**

(84) Designated Contracting States:
**DE FR GB IT**

(71) Applicant: **Allied Chemical Corporation**
**P.O. Box 1057 R**
**Morristown New Jersey 07960(US)**

(72) Inventor: **Kesten, Yali**
**131/17 Hameschrerim Street**
**Beer Sheva(IL)**

(72) Inventor: **Prevorsek, Dusan C.**
**21 Harwich Road**
**Morristown New Jersey 07960(US)**

(74) Representative: **Baillie, Iain Cameron et al,**
**c/o Ladas, Parry, von Gehr. Goldsmith & Deschamps**
**Blumenstrasse 48**
**D-8000 München 2(DE)**

(54) **Polyester-carbonates containing bisphenol-A and trans-1,4-cyclohexane dicarboxylic acid moieties and process for production thereof.**

(57) This invention relates to novel polyestercarbonate copolymers in which bisphenol-A and trans-1,4-cyclohexane dicarboxylic acid moieties are linked by ester and carbonate links, optionally including other dibasic acid moieties, especially terephthalic and/or isophthalic moieties, in no greater molar proportion than the cyclohexane dicarboxylic moiety. These copolymers are melt processable; have high heat resistance for a thermoplastic; have good impact and abrasion resistance; and have good freedom from color even after exposure to ultraviolet light.

EP 0 006 965 A1

POLYESTER-CARBONATES CONTAINING BISPHENOL-A AND TRANS-1, 4-CYCLOHEXANE DICARBOXYLIC ACID MOIETIES & PROCESS FOR PRODUCTION THEREOF

BACKGROUND OF THE INVENTION

It is known .to produce polyester-carbonate copolymers from bisphenol-A and certain dicarboxylic acids, in particular, adipic acid, isophthalic acid and terephthalic acid. See U.S.P. 3,169,121 of February 9, 1965 to E. P. Goldberg. This patent broadly suggests at column 3, lines 64-70 that the dicarboxylic acid can contain an alkylene, alkylidene, or cycloaliphatic group; and cites certain such groups at column 4, lines 7-33 including tetrahydroterephthalic acid, i.e. 1,4-cyclohexane dicarboxylic acid etc.; but no specific teaching of how to make or use polyester-carbonate copolymers containing cyclohexane dicarboxylic acid is presented in the patent, or elsewhere in the prior art so far as we are aware.

Use of trans-1,4-cyclohexane dicarboxylic acid for production of alicyclic polybenzoxazinones is disclosed in the publication Die Makromolekulare Chemie, Volume 126 (1969) pages 48-55 by Y. Hagiwara et al. It is noted in this article that these alicyclic polymers are colorless whereas the corresponding aromatic polymers are tan or yellow colored (page 49, lines beneath the formulas).

SUMMARY OF THE INVENTION

We have now found specific melt-processable polyester-carbonate copolymers of bisphenol-A (hereinafter called "BPA" and trans-1,4-cyclohexane dicarboxylic acid (hereinafter called "CHDA") moieties, having desirable properties of low color, good impact strength and good abrasion resistance. Our polyester-carbonate copolymers have viscosity number (i.e. specific viscosity divided by concentration) of at least 0.6 dl./g. measured at 25°C. and 0.5 g./100cc. concentration in 40:60 weight ratio of tetrachloroethane:phenol solvent, and have mole ratio of the BPA:CDHA moieties in the range between 2:0.4 and 2:1.3. (The molar proportion of carbonate moiety amounts to the difference between BPA and acid moieties.) The distribution is essentially random.

These copolymers can additionally contain other dibasic acid moieties, in particular moieties of terephthalic ("TPA") and/or isophthalic acid in no greater molar proportion than the CHDA moiety.

### PREFERRED EMOBODIMENTS

The examples which follow illustrate preferred embodiments of our invention, but the invention is not intended to be limited by the details of the examples. As seen in the examples, the copolymers of this invention are obtained using excess pyridine over the theoretical 2:1 mole ratio with BPA, and using several fold dilution of the pyridine with dichloromethane.

Example 1

132.8 grams of BPA (0.583 mole) was dissolved in 140 ml. of pyridine/1280 ml. of dichloromethane ("DCM") solvent. Then 60 grams of trans-1,4-cyclohexane dicarboxylic acid dichloride ("CHDC") (0.287 mole) dissolved in 500 ml of dichloromethane was added slowly at room temperature. To the resulting solution, phosgene was added by bubbling in with good stirring until the solution became viscous. Then the solution, containing precipitated pyridinium hydrochloride, was further diluted with enough DCM to facilitate its filtration through a coarse sintered glass filter.

After being filtered on the glass filter, the solution was poured with vigorous stirring into about 3 volumes of acetone whereby it was precipitated. The precipitate was filtered and dried; and dissolved in about 2 liters of dichloromethane, to which activated charcoal (2 grams) was added. After filtration to remove the charcoal, the polymer was precipitated a second time in acetone as above, and filtered off. Then the polymer was washed with hot water (70°-80°) and then with acetone; and was filtered and dried.

Properties observed for the resulting polymer were:

BPA:CHDA moieties (mole ratio by infrared for proportion of ester vs. carbonate carbonyl groups, as determined by using standard mixtures of BPA polycarbonate with BPA/CHDA polyester for calibration). = 2:1.1

Viscosity number = 1.4 dl./g.

Glass transition temperature ($T_g$) = 176°C.

Abrasion resistance by falling grit method (ASTM No. D-673-70) expressed as difference in percent haze when measured after vs. before abrasion using 300 ml. grit=17%; using 1000 ml. grit=21%.

These results can be compared to values for standard commercial polycarbonate, obtained by the same test method, of 300 ml.=27%; 1000 ml.=41%.

The impact strength of the present polyester-carbonate copolymer was at a satisfactory level of 3.2 ft.-pounds per inch of notch, as determined upon samples cut from a plaque and compression molded. Such production of a satisfactory test plaque shows that the polymer is melt processable.

Observation of the polymer in plaque form, before and after exposure to ultraviolet light, showed that the exposed polymer had practically the same absorption of ultraviolet radiation as did the original polymer; and that the polymer before and after exposure was water white in color.

Example 2

114 grams of BPA (0.500 mole) was dissolved in 120 ml of pyridine and 1000 ml of dichloromethane. A solution containing 20.3 grams of terephthaloyl chloride ("TPC") and 31.1 grams of CHDC dissolved together in 500 ml of dichloromethane was poured slowly (several seconds) into the BPA solution with good stirring at 25°C. After a few minutes, and just prior to phosgenation; 2.5 grams of t-butylphenol was added as a molecular weight regulator. Phosgene was then bubbled into the solution with good stirring at 25°C until the viscosity reached a maximum and leveled off - as judged by visual observation. The feed ratio of ingredients in moles was BPA:CHDC:TPC:phosgene = 2.0:0.6:0.4:excess over 1.

The resulting polymer solution was filtered to remove much of the solid pyridinium hydrochloride. The polymer was isolated as a soft precipitate by pouring the solution as a slow stream with stirring into three volumes of acetone. The precipitate was chopped up in a Waring Blender in 1 l. of methanol, filtered, and washed with water at 70-80°C followed by 1 l. of methanol. The polymer was then dried, redissolved in 1.5 l. of dichloromethane, and reprecipitated in acetone as described above. The reprecipitated polymer was chopped up in methanol as above, filtered, and washed with hot water and methanol, and dried, as above.

$T_g$ = 175°C

Viscosity number = 0.73 dl./g.

Mole ratio of BPA:CHDA:TPA moieties (by infrared, using pure BPA polycarbonate and pure BPA polyester of CHDA and of TPA for calibration) = 2:0.5:0.4

In color, this copolymer was light yellow, showing optical density of 2% solution for absorption of visible blue light (400-480 nm wavelength) of 0.015 at 480 nm, 0.02 at 450 and 425 nm, and 0.04 at 400 nm; these figures are about double the values found for the practically colorless product of Example 1.

The $T_g$ values of 175°C shows a relatively high resistance at the level of viscosity number (0.73 dl./g.) compared to the very similar $T_g$ and considerably higher viscosity number (1.4 dl./g.) of Example 1.

We claim:

1. A solid thermoplastic polyester-carbonate melt-processable copolymer of bisphenol-A and trans-1,4-cyclohexane dicarboxylic acid moieties, having viscosity number of at least 0.6 dl/g. measured at 25°C and 0.5 g/100cc. concentration in 40:60 weight ratio of tetrachloroethane: phenol solvent, and having mole ratio of the bisphenol-A:cyclohexane dicarboxylic acid moieties in the range between 2:0.4 and 2:1.3 with essentially random distribution of the moieties composing the polymer chains.

2. Copolymer of claim 1 additionally containing moieties of the group consisting of terephthalic acid and isophthalic acid and their mixtures in no greater molar proportion than the cyclohexane dicarboxylic acid moiety.

3. Process of producing a melt-processable copolymer of claim 1, comprising contacting bisphenol-A and chloride of trans-1,4-cyclohexane dicarboxylic acid in a reaction medium of pyridine diluted several fold with dichloromethane; then adding phosgene whereby the solution becomes viscous; the mole ratio of bisphenol-A:cyclohexane dicarboxylic acid chloride being in the range from 2:0.4 to 2:1.3 and the pyridine being used in excess over 2:1 mole ratio with the bisphenol-A.

4. Process of claim 3 wherein terephthaloyl chloride is provided in the reaction medium, in no greater molar proportion than the cyclohexane dicarboxylic acid chloride used.

0006965

European Patent
Office

**EUROPEAN SEARCH REPORT**

Application number

EP 79 100 766.9

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | DE – A – 1 520 033 (GEVAERT) <br> * claims 1 and 8 * <br><br> --- <br><br> DE – A – 2 714 544 (ALLIED CHEMICAL) <br> * claim 4 * <br><br> -- | 1 <br><br><br><br> 3 | C 08 G  63/64 |
| A | DE – B – 1 568 342 (CHEMISCHE WERKE HÜLS) <br> * column 4, lines 12 to 14 * <br><br> -- | | **TECHNICAL FIELDS SEARCHED (Int.Cl.²)** <br><br> C 08 G  63/00 |
| A | GB – A – 1 045 211 (CHEMISCHE WERKE HÜLS) <br> * page 2, lines 87 to 96 * <br><br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> Berlin | Date of completion of the search <br> 11-07-1979 | Examiner <br> MARX | |

EPO Form 1503.1  06.78